# EUROPÄISCHE PATENTANMELDUNG

(11) **EP 3 141 331 A1**
(43) Veröffentlichungstag der Anmeldung: **15.03.2017**
(21) Anmeldenummer: 15184941.1
(22) Anmeldetag: 11.09.2015
(51) Int. Cl.: B23K 31/02, B23P 9/04

(54) **VERFAHREN UND VORRICHTUNG ZUM GLÄTTEN EINER SCHWEISSNAHT IM VERBINDUNGSBEREICH VON ZWEI MITEINANDER VERBUNDENEN BAUTEILEN**

(71) Anmelder: Maritime Offshore Group GmbH, 28355 Bremen (DE)
(72) Erfinder: Reales Bertomeo, Emilio, 27753 Delmenhorst (DE)
(74) Vertreter: Eisenführ Speiser

(57) **Zusammenfassung**

Die Erfindung betrifft ein Verfahren und eine Vorrichtung zum Glätten einer Schweißnaht (4, 4') im Verbindungsbereich von zwei mittels der Schweißnaht (4, 4') miteinander verbundenen Bauteilen (2, 2', 68, 68'). Erfindungsgemäß umfasst das Verfahren die Schritte Hämmern der Schweißnaht (4, 4') mittels eines oder mehrerer maschinell angetriebener Bearbeitungswerkzeuge (24, 82), und Bewegen des Bearbeitungswerkzeugs (24, 82) im Wesentlichen entlang der Schweißnaht (4, 4'). Die Vorrichtung zeichnet sich durch eine Hammer-Einrichtung (24, 82) zum Hämmern der Schweißnaht (4, 4') mit einem oder mehreren angetriebenen Bearbeitungswerkzeugen (24, 82) für die Schweißnaht (4, 4'), und eine Fahreinheit (10, 10') zum Bewegen der Hammer-Einrichtung (8, 60) zum Hämmern der Schweißnaht entlang der Schweißnaht (4, 4') aus.

## Beschreibung

Die Erfindung bezieht sich auf ein Verfahren zum Glätten einer Schweißnaht im Verbindungsbereich von zwei mittels der Schweißnaht miteinander verbundenen Bauteilen. Des Weiteren bezieht sich die Erfindung auch auf eine Vorrichtung zum Glätten einer Schweißnaht im Verbindungsbereich von zwei mittels der Schweißnaht miteinander verbundenen Bauteilen.

Im Stahl- und Anlagenbau werden die verschiedensten Konstruktions- und Anlagenteile mittels des Prozesses des Schweißens miteinander verbunden. Mittels der beim Schweißen hergestellten Schweißnähte wird einen Stoffschluss und damit eine bevorzugt dauerhaft feste Verbindung zwischen aneinandergrenzenden Materialbereichen der miteinander zu fügenden Bauteile bewirkt. Um eine hohe Festigkeit einer solchen Schweißnahtverbindung zwischen den Bauteilen sicherzustellen, werden Schweißnähte erzeugt, wo die oberste oder oberen Schichten der Schweißnaht häufig als Wulst über die Oberflächen an insbesondere stumpf aneinander gesetzten Bauteilen hervorstehen.

Die hervorstehenden Schweißnaht-Bereiche beeinträchtigen die herzustellenden Bauteile nicht nur in ihrer Ästhetik, sondern haben nachteilige Auswirkungen im Verbindungsbereich rund um die Schweißnaht. Die hervorstehenden Schweißnaht-Wülste verursachen beispielsweise an Rohrleitungen, in denen flüssige oder gasförmige Medien strömen, auf der Rohrinnenseite häufig unerwünschte Verwirbelungen des strömenden Mediums. Die üblicherweise ungleichmäßig ausgeformten Oberflächen der Schweißnähte weisen Poren oder Sicken auf, in denen sich über einen längeren Zeitraum Korrosionsnester ausbilden können, die den Schweißnahtbereich nach und nach schwächen. Darüber hinaus können Schutzanstriche gegen eine mögliche Korrosion auf den unregelmäßigen Oberflächen der Schweißnähte nur ungenügend anhaften. Insbesondere bei dynamisch belasteten Komponenten können Kraftflüsse durch unbehandelte Schweißnähte derart nachteilig beeinflusst werden, dass es zu unerwünschten Spannungsknoten in der hergestellten Bauteilstruktur kommt.

Um diesen Nachteilen entgegenzuwirken, ist es bekannt, im Stahl- und Anlagenbau die entstehenden Schweißnaht-Wülste mit Handschleifern oder automatisierten Schleifmaschinen zu bearbeiten. Insbesondere an großen Stahlbauteilen, wie zum Beispiel im Schiffbau oder im Bereich der Offshore-Technologie, wo eine Vielzahl von Schweißnähten nachträglich zu bearbeiten sind, werden erhebliche Mengen an Schleifmitteln und eine relativ hohe Anzahl an Arbeitsstunden aufgewendet, um überstehende beziehungsweise vorstehende Schweißnaht-Wülste zu entfernen und damit die Oberfläche zu glätten.

Das spanende Bearbeiten mittels Schleifen hat jedoch zum einen den Nachteil, dass das zuvor aufgetragene Material teilweise wieder entfernt wird und gegebenenfalls das Abtragen von Material zu einer verringerten Festigkeit im Schweißnaht-Bereich führen kann. Darüber hinaus ist der Vorgang des Schleifens mit einem hohen Einsatz an Schleifmitteln verbunden, welcher zusammen mit dem abgetragenen Material zumindest teilweise in Form von Staub in die Umwelt gelangt und eine Belastung für Mensch und Umwelt darstellt. Des Weiteren sind die verbrauchten Schleifmittel als Sondermüll zu entsorgen, weshalb diese Form des Nachbearbeitens von Schweißnähten mit erheblichen Kosten verbunden ist.

Der Erfindung liegt daher die Aufgabe zugrunde, ein Verfahren und eine Vorrichtung zum Glätten von Schweißnähten an miteinander verbundenden Bauteilen anzugeben, mit denen die oben genannten Nachteile vermieden sind.

Die Erfindung löst die ihr zugrundeliegende Aufgabe bei einem Verfahren der vorbezeichneten Gattung mit den Schritten: Hämmern der Schweißnaht mittels eines oder mehrerer maschinell angetriebener Bearbeitungswerkzeuge, und Bewegen des Bearbeitungswerkzeuges im Wesentlichen entlang der Schweißnaht.

Der Erfindung liegt die Erkenntnis zugrunde, dass mit dem Hämmern der Schweißnaht zumindest Bereiche der Oberfläche der Schweißnaht abschnittsweise bearbeitet werden, welche unregelmäßig ausgeformt sind und in denen das Risiko der Ausbildung feiner Poren oder Sicken sehr hoch ist. Durch das Hämmern werden bevorzugt die Schweißnahtbereiche geglättet, die im Vergleich zu den Oberflächen der miteinander zu verbindenden Bauteile sehr stark hervorstehen, wodurch die Wulsthöhe der Schweißnaht, also das Maß, das den Überstand der Schweißnaht zur Oberfläche der beispielsweise stumpf aneinandergesetzten Bauteile angibt, zumindest vergleichmäßigt wird. Spitzen in der Wulsthöhe werden verringert und gegebenenfalls Täler in der Schweißnaht angehoben. Durch das Hämmern erfolgt eine Materialverdichtung, wodurch vorhandene Sicken oder Poren geschlossen und der Entstehung von Korrosionsnestern entgegengewirkt wird. Zudem ist durch die Ausbildung einer gleichmäßigen Schweißnaht-Oberfläche das Anhaften eines Korrosions-Schutzanstriches verbessert. Vorzugsweise wird, anstelle des Hämmerns von nur Abschnitten der Schweißnaht, die gesamte Schweißnaht entlang ihrer Erstreckung derart gehämmert, dass die Oberfläche der beispielsweise in Form einer Stumpfnaht ausgebildeten Schweißnaht plan bzw. eben zur Oberfläche der benachbarten Bauteilebereiche verläuft. Die Schweißnaht steht somit nicht an den Bauteilen vor. Bei Bauteilen, welche über eine Kehlnaht miteinander verbunden sind, ist vorrangig die Ausbildung einer gleichmäßig geformten Oberfläche der erzeugten Schweißnaht entscheidend. Zum Glätten der Schweißnaht wird das Bearbeitungswerkzeug vorzugsweise entlang der gesamten Länge der Schweißnaht bewegt, wobei entweder die gesamte Schweißnaht bearbeitet oder auch nur ausgewählte Abschnitte der Schweißnaht geglättet werden. Die Bewegung des Bearbeitungswerkzeuges entlang der Schweißnaht erfolgt vorzugsweise geführt, wobei das Bearbeitungswerkzeug entlang einer vorgegebenen Führungsbahn entlang der Schweißnaht beispielsweise von Hand bewegt wird.

Gemäß einer bevorzugten Weiterbildung der Erfindung ist vorgesehen, dass der Schritt des Bewegens des Bearbeitungswerkzeuges ein maschinelles Bewegen des Bearbeitungswerkzeuges mittels einer Fahreinheit umfasst. Mittels des maschinellen Bewegens des Bearbeitungswerkzeuges, was vorzugsweise mithilfe einer motorisch angetriebenen Fahreinheit erfolgt, ist eine Fahrbewegung des auf die Schweißnaht einwirkenden Bearbeitungswerkzeuges mit einer gezielt einstellbaren Geschwindigkeit entlang der Schweißnaht möglich. Vorzugsweise wird die Fahreinheit entlang der Schweißnaht geführt, wodurch zumindest eine Vorausrichtung des Bearbeitungswerkzeuges zu der zu bearbeitenden Schweißnaht gewährleistet ist.

Bevorzugt wird die Schweißnaht durch das Hämmern über ihre gesamte Breite geglättet. Darüber wird erreicht, dass die gesamte Schweißnaht auch in Querrichtung vorzugsweise eine gleichmäßig geformte Oberfläche und bevorzugt jeweils ebene Übergänge zu den angrenzenden Bauteilbereichen aufweist. Zudem ist die Oberfläche frei von Poren oder Sicken. Darüber hinaus wird mit dem Glätten von beispielsweise einer Stumpfnaht über ihre gesamte Breite erreicht, dass die Oberfläche der geglätteten Schweißnaht vorzugsweise in einer Ebene zu den Flächenbereichen der angrenzenden Bauteile verläuft. Die Schweißnaht weist keine vor- beziehungsweise überstehenden Materialbereiche und damit keine Schweißnaht-Wulst auf.

Gemäß einer bevorzugten Ausgestaltung des erfindungsgemäßen Verfahrens wird das Bearbeitungswerkzeug während seiner Verfahrbewegung entlang der Schweißnaht in vorbestimmten Abständen etwa quer zur Erstreckungsrichtung der Schweißnaht bewegt. Mit dem Bewegen des Bearbeitungswerkzeuges quer zur Erstreckungsrichtung der Schweißnaht wird sichergestellt, dass die Schweißnaht über ihre gesamte Breite geglättet wird. Das Bearbeitungswerkzeug wird vorzugsweise auf einer etwa mäanderförmigen Bewegungsbahn über die Schweißnaht geführt. Die Verfahrbewegung des Bearbeitungswerkzeuges entlang der Schweißbahn ist vorzugsweise eine Bewegung mit intermittierenden in Erstreckungsrichtung der Schweißnaht und quer zur Erstreckungsrichtung der Schweißnaht gerichteten Bewegungssequenzen oder Bewegungsabschnitten.

Bevorzugt führt das Bearbeitungswerkzeug eine periodische Hämmer-Bewegung mit einer Frequenz im Bereich von 100 bis 250 Hertz aus, bevorzugt in einem Bereich von 150 bis 200 Hertz. Über die hohe Frequenz im Bereich von 100 bis 250 Hammerschlägen pro Sekunde ist in Verbindung mit den Materialeigenschaften des zu bearbeitenden Werkstoffes eine einfache Bearbeitung und damit ein Umformen von zumindest den oberen Schichten der erzeugten Schweißnaht bewirkt. Aufgrund der hohen Frequenz, mit der das Bearbeitungswerkzeug auf die Oberfläche der Schweißnaht einwirkt, kann, im Vergleich zu sonst üblichen Umformungsverfahren von metallischen Materialien, mit einer vergleichsweise geringen Hämmer- beziehungsweise Schlagkraft des Bearbeitungswerkzeugs eine Materialumformung an der Schweißnaht erzielt werden. Das Bearbeitungswerkzeug bewegt sich bevorzugt entlang einer etwa senkrecht zur Oberfläche ausgerichteten Geraden, sodass das Bearbeitungswerkzeug oberhalb der zu bearbeitenden Oberfläche der Schweißnaht eine Translationsbewegung ausführt.

Eine andere Weiterbildung des erfindungsgemäßen Verfahrens sieht vor, dass das Bearbeitungswerkzeug zum Ausführen der Hämmer-Bewegung entlang einer Bewegungsbahn bewegt wird, wobei die Bearbeitungsbahn zur Oberfläche eines unmittelbar zugeordneten Bearbeitungsabschnitts oder -punktes der Schweißnaht fest oder veränderbar in einem Winkel im Bereich von 45° bis 90° Grad ausgerichtet wird. Das Bearbeitungswerkzeug kann bevorzugt in seiner Ausrichtung zur Oberfläche der zu bearbeitenden Schweißnaht verändert werden. Dadurch ist eine gezielte Bearbeitung von Schweißnahtbereichen an zum Beispiel einer Kehlnaht im Verbindungsbereich von zwei in einem Winkel zueinander ausgerichteten oder teilweise einander überlappend angeordneten Bauteilen möglich. Die Bearbeitungsspitze des Bearbeitungswerkzeuges wird bei insbesondere einer Kehlnaht so zu dem zu bearbeitenden Schweißnaht-Bereich angestellt, dass die Bewegungsbahn bevorzugt senkrecht zur Oberfläche eines jeweiligen Bearbeitungspunktes ausgerichtet ist. Darüber ist eine optimale Kraftwirkung des Bearbeitungswerkzeuges auf den zu hämmernden Schweißnahtabschnitt gewährleistet. Durch Verändern des Winkels beziehungsweise der Ausrichtung der Bewegungsbahn zur Oberfläche eines Schweißnahtabschnittes von beispielsweise einer Kehl- oder Stumpfnaht, besteht die Möglichkeit eine gerichtete Materialverdrängung zu bewirken. Dadurch können Schweißnaht-Täler durch benachbarte Schweißnaht-Spitzen oder -berge gefüllt werden.

Gemäß einer bevorzugten Weiterbildung umfasst das Verfahren zum Glätten die Schritte, Vermessen einer Wulsthöhe der an den Oberflächen der miteinander verschweißten Bauteile vorstehenden Schweißnaht in Verfahrrichtung vor und/oder hinter einer momentanen Bearbeitungsposition des Bearbeitungswerkzeuges, Ermitteln von zumindest der für den Vorgang des Hämmerns benötigten Schlagdauer an der momentanen Bearbeitungsposition der Schweißnaht, auf Grundlage der an der jeweiligen momentanen Bearbeitungsposition gemessenen Wulsthöhen der Schweißnaht, und Hämmern an der momentanen Bearbeitungsposition, auf Basis der ermittelten Schlagdauer. Dadurch kann auf einen jeweiligen Schweißnahtabschnitt mit einer individuell abgestimmten Schlagdauer eingehämmert werden. Dadurch ist eine bevorzugt ebene Oberfläche der Schweißnaht bewirkt. Auf Grundlage der ermittelten Schlagdauer wird die Verweilzeit des Bearbeitungswerkzeuges an der jeweiligen Position eingestellt, bevor das Bearbeitungswerkzeug mittels der Fahreinheit an eine nachfolgende Bearbeitungsposition bewegt, beziehungsweise verfahren wird. Durch das Vermessen der Wulsthöhe beziehungsweise der Oberflächengüte eines jeweiligen Schweißnahtabschnittes ist es möglich, ein Hämmern von Schweißnahtabschnitten der erzeugten Schweißnaht durchzuführen, in denen der Vorgang des Glättens unbedingt notwendig ist. Schweißnahtbereiche, welche eine ausreichend geringe Wulsthöhe, beziehungsweise eine hohe Oberflächengüte aufweisen, können somit von einer unnötigen Bearbeitung durch das Bearbeitungswerkzeug ausgenommen werden. Das Vermessen der Wulsthöhe beziehungsweise der Oberflächengüte erfolgt beispielsweise mithilfe von Abstandssensoren, welche die Wulsthöhe in Verfahrrichtung vermessen, bevor und nachdem die Bearbeitung erfolgte. Auf Grundlage der Differenzwerte zwischen den Wulsthöhen, beziehungsweise im direkten Vergleich zu den benachbarten Oberflächenbereichen der Bauteile, wird dann die Schlagdauer und die damit verbundene Verweilzeit des Bearbeitungswerkzeuges an der momentanen Bearbeitungsposition auch im Hinblick auf die Festigkeit der Schweißnaht berechnet. Auf Basis der errechneten Schlagdauer verweilt das Bearbeitungswerkzeug mittels der Fahreinheit mitunter an der entsprechenden Position und fährt erst anschließend zur nächsten Bearbeitungsposition weiter. Alternativ wird die Verfahrgeschwindigkeit durch die Fahreinheit so angepasst, dass das Bearbeitungswerkzeug bevorzugt kontinuierlich oberhalb der Schweißnaht verfahren wird. Unter der erfassten Wulsthöhe ist das Differenzmaß zu verstehen, mit der die Schweißnaht an einer jeweiligen Bearbeitungsposition zu einem benachbarten Oberflächenbereich des Bauteils vorsteht.

Bevorzugt ist das erfindungsgemäße Verfahren dazu eingerichtet, eine Schweißnaht im Verbindungsbereich zweier Bauteil einer Gründungsstruktur einer Offshore-Anlage, vorzugsweise einer Windenergieanlage, zu hämmern. Speziell bei Gründungsstrukturen, sogenannten Jacket-Strukturen, zur Gründung von Offshore zu errichtenden Windenergieanlagen, wie sie von der hiesigen Anmelderin angeboten werden, können die Verbindungsbereiche zwischen zwei mittels einer Schweißnaht miteinander verbundene Bauteile auf einfache Weise geglättet werden. Das Glätten der Schweißnähte erfolgt dabei ohne ein Abtragen des Materials der zuvor aufwendig aufgebrachten Schweißnaht. Unter Jacket-Strukturen sind vorliegend Stahlkonstruktionen zu verstehen, welche drei oder mehr senkrecht oder geneigt zueinander verlaufende Stützpfähle aufweisen, die über Verbindungsstreben miteinander verbunden werden, oder mehrere übereinander angeordnete Fachwerksegmente aus einer Vielzahl von Knotenpunkten ausbildenden Verbindungsstreben aufweisen.

Gemäß einer anderen Weiterbildung der Erfindung wird eine Schweißnaht im Verbindungsbereich zweier vorzugsweise stumpf miteinander verschweißter Bauteile gehämmert, wobei die Bauteile im Verbindungsbereich unterschiedliche Materialdicken aufweisen. Mithilfe des erfindungsgemäßen Hämmerns können nunmehr Bauteile über vorzugsweise eine Stumpfnaht miteinander verschweißt werden, welche im Verbindungsbereich unterschiedliche Materialdicken bzw. -stärken besitzen. Bei zum Beispiel einer zusammengesetzten Rohrstruktur von aneinander gesetzten rohrförmigen Bauteilen einer Gründungstruktur weisen die äußeren und/oder inneren Wandflächen der beiden miteinander zu verschweißender Bauteile mindestens einseitig einen Versatz zueinander auf. Auf das vorherige Erzeugen eines Verbindungsbereiches mit annähernd gleicher Wandstärke, was eine aufwendige Bearbeitung eines der Bauteile notwendig machte, kann bei Bauteilen, welche unterschiedliche Materialdicken aufweisen, verzichtet werden. Mit dem Hämmern der Schweißnaht in dem Bereich der Verbindungsstelle, wo der Versatz bzw. der Materialsprung zwischen den Bauteilen besteht, kann die Kerbwirkung deutlich reduziert werden. Damit ist der Fertigungsaufwand für das Vorbereiten der beiden miteinander zu verschweißenden Bauteile auf vorteilhafte Weise verringert. Vorzugsweise weisen die beiden miteinander zu verbindenden Bauteile mit unterschiedlicher Materialstärke bzw. Wanddicke nur einen einseitigen Versatz der Wandflächen auf. Somit fluchtet mindestens eine der beiden Wandflächen des einen Bauteils mit einer der beiden Wandflächen des anderen Bauteils.

Ein weiterer Aspekt der Erfindung bezieht sich auf ein Verfahren zum Herstellen eines sich aus mindestens zwei Bauteilen zusammensetzenden Strukturteiles, umfassend die Schritte, Verschweißen der miteinander zu fügenden Bauteile, und Glätten der Schweißnaht nach einem Verfahren gemäß einem der vorstehend beschriebenen bevorzugten Ausführungsformen. Der Erfindung liegt die Erkenntnis zugrunde, dass mithilfe eines dem Schweißverfahren nachgeschalteten Verfahren zum Glätten der Schweißnaht eine maschinelle Nachbearbeitung der Schweißnaht bevorzugt unmittelbar im Anschluss an das Verschweißen von miteinander zu fügenden Bauteilen vorgenommen werden kann. Dadurch ist eine automatisierte Herstellung von Rohrleitungen, wie beispielsweise Pipelines zum Transport von Öl oder Gas, oder das Herstellen von großformatigen Stahlplatten bei der Großkomponentenfertigung im Schiffbau möglich. Das Glätten der Schweißnaht wird gemäß einer bevorzugten Ausgestaltung des erfindungsgemäßen Herstellungsverfahrens im Anschluss an das Erzeugen der Schweißnaht, also nach Abschluss der Schweißarbeiten an einer jeweiligen Schweißnaht, oder noch während des Herstellens einer jeweiligen Schweißnaht durchgeführt. Das nachträgliche Glätten erfolgt, wenn die Erkaltung der Schweißnaht sehr langsam erfolgen muss, um Spannungsrisse am Werkstück infolge der Materialausdehnung durch die erfolgte Erwärmung zu vermeiden. Hinsichtlich vorteilhafter Ausgestaltungen des Verfahrens zum Glätten der Schweißnähte wird auf die oben beschriebenen bevorzugten Ausführungsformen verwiesen.

Die Erfindung bezieht sich des Weiteren auf eine Vorrichtung zum Glätten einer Schweißnaht im Verbindungsbereich von zwei mittels der Schweißnaht miteinander verbundenen Bauteilen, mit einer Hammer-Einrichtung zum Hämmern der Schweißnaht mit einem oder mehreren angetriebenen Bearbeitungswerkzeugen für die Schweißnaht, und einer Fahreinheit zum Bewegen der Hammereinrichtung, zum Hämmern der Schweißnaht entlang der Schweißnaht. Mit einer solch erfindungsgemäß ausgebildeten Vorrichtung zum Glätten von Schweißnähten ist eine einfache und präzise Nachbearbeitung der erzeugten Schweißnähte möglich, ohne die Umwelt unnötig durch Schleif- oder Materialreste zu belasten. Mithilfe der Hammereinrichtung an der das Bearbeitungswerkzeug angeordnet beziehungsweise aufgenommen ist, wird das Bearbeitungswerkzeug in eine oszillierende Bewegung mit einer Frequenz im Bereich von 100 bis 250 Hz versetzt. Über die erzeugte Bearbeitungsbewegung werden die oberen Schweißnahtbereiche verformt, dergestalt, dass zumindest eine Glättung der Oberfläche der Schweißnaht erzeugt wird. Schweißnahtspitzen und Schweißnahttäler werden dabei bevorzugt ausgeglichen und ein gleichmäßiger Übergang auf beiden Seiten der Schweißnaht zu den Bauteilbereichen erzeugt. Vorzugsweise wird mithilfe der Hammer-Einrichtung an Stumpfnähten die Oberseite einer solchen Schweißnaht derart bearbeitet, dass die oberen Schichten der Schweißnaht zu den angrenzenden Oberflächen der miteinander verbundenen Bauteile nicht vor- oder überstehen. Die Vorrichtung weist bevorzugt ein Gehäuse auf, in der eine Fahreinheit aufgenommen oder an der eine Fahreinheit zum Bewegen von zumindest der Hammer-Einrichtung während des Bearbeitens der Schweißnaht entlang der Schweißnaht angeordnet ist.

Eine andere Weiterbildung der erfindungsgemäßen Vorrichtung sieht vor, dass die Fahreinheit ein Antriebsmittel zum maschinellen Bewegen des Bearbeitungswerkzeuges, insbesondere der Fahreinheit, entlang der Schweißnaht aufweist. Die Fahreinheit, welche vorzugsweise ein elektrisch angesteuertes Antriebsmittel umfasst, wie beispielsweise einen Elektromotor, gewährleistet eine gesteuerte Fahrbewegung des Bearbeitungswerkzeuges mit einer vorbestimmten Geschwindigkeit des auf die Schweißnaht einwirkenden Bearbeitungswerkzeuges entlang der Schweißnaht. Bevorzugt ist die Fahreinheit eingerichtet, die Geschwindigkeit der Fahrbewegung des Bearbeitungswerkzeuges oberhalb der Schweißnaht, in Abhängigkeit von den variierenden Wulsthöhen der Schweißnaht, anzupassen. Entsprechend kann die Geschwindigkeit des Bearbeitungswerkzeuges in Verfahrrichtung beschleunigt oder verlangsamt werden.

Vorzugsweise weist die Hammer-Einrichtung einen Schwingungserzeuger mit einem Schwingkopf für das Bearbeitungswerkzeug zum Erzeugen einer periodischen Hämmer-Bewegung auf. Mittels des eingesetzten Schwingungserzeugers, wie beispielsweise einem Ultraschallwandler, werden harmonische Schwingungen in mechanische Impulse in Form der Bearbeitungsbewegung des Werkzeuges umgewandelt werden. Der das Bearbeitungswerkzeug aufnehmende Schwingkopf führt vorzugsweise eine Schwingbewegung mit einer Frequenz im Bereich von 100 bis 250 Hz aus, bevorzugt in einem Frequenzbereich von 150 bis 200 Hz. Der vom Schwingungserzeuger bewegte Schwingkopf wird bevorzugt in eine translatorische Bewegung entlang einer Geraden, also in eine sich kontinuierlich wiederholende Hin-und-her-Bewegung versetzt.

Bevorzugt ist das Bearbeitungswerkzeug ein Metallstift mit einer abgerundeten oder kugelförmigen Hammerfläche, wobei die Hammerfläche des Bearbeitungswerkzeuges vorzugsweise größer als die Breite der zu glättenden Schweißnaht ist. Als Bearbeitungswerkzeuge werden Metallstifte verwendet, bevorzugt Hartmetallstifte, welche an ihrer Bearbeitungsspitze eine abgerundete oder kugelförmige Hammerfläche aufweisen. Darüber ist eine bevorzugt punktuelle Belastung des bearbeiteten Schweißnahtbereiches erzielt, wodurch eine zuverlässige Verformung und eine damit verbundene Materialverdrängung der bearbeiteten Schweißnahtbereiche gewährleistet werden. Vorzugsweise weist die mit der Schweißnaht in Kontakt gebrachte Hammerfläche des Metallstiftes Abmessungen auf, welche vorzugsweise derart gewählt sind, dass die Hammerfläche des Metallstiftes größer als die Breite der zu bearbeitenden Schweißnaht ist. Dadurch wird erreicht, dass das Bearbeitungswerkzeug vorzugsweise nur in Erstreckungsrichtung der Schweißnaht bewegt wird. Damit ist eine verkürzte Bearbeitungszeit durch die erfindungsgemäße Vorrichtung zum Glätten von Schweißnähten gewährleistet.

Vorzugsweise ist der Schwingkopf etwa quer zur Erstreckungsrichtung der Schweißnaht verstellbar an der Hammer-Einrichtung aufgenommen. Die Hammer-Einrichtung weist vorzugsweise eine Verstelleinrichtung für mindestens den Schwingkopf auf. Vorzugsweise ist die Verstelleinrichtung dazu eingerichtet, den Schwingkopf zumindest quer zur Erstreckungsrichtung der Schweißnaht zu bewegen. Eine solche Verstelleinrichtung kommt vorrangig zum Einsatz, wenn die Hammerfläche des Bearbeitungswerkzeuges, aufgrund der Größe der zu glättenden Schweißnaht, geringere Abmessungen als die Breite der Schweißnaht selbst aufweist. Um die Schweißnaht über ihre gesamte Breite glätten zu können, ist es vorteilhaft, den Schwingkopf mitsamt des Bearbeitungswerkzeuges über die Verstelleinrichtung seitlich zur Längsrichtung der Schweißnaht auszurichten. Bevorzugt sind auch Bereiche des Schwingungserzeugers der Hammer-Einrichtung quer zur Schweißnaht verschiebbar. In einer alternativen Ausführungsform der erfindungsgemäßen Vorrichtung ist der Schwingkopf über die Verstelleinrichtung schwenkbar an der Hammer-Einrichtung aufgenommen, sodass der Schwingkopf eingerichtet ist, das Bearbeitungswerkzeug in einem Winkel geneigt zur Oberfläche des zu bearbeitenden Schweißnahtabschnittes zu halten. Bevorzugt ist der Schwingkopf um eine senkrecht zur Bearbeitungsrichtung des Bearbeitungswerkzeuges verlaufende Schwenkachse beweglich aufgenommen.

Gemäß einer bevorzugten Ausgestaltung der Erfindung ist eine an der Hammer-Einrichtung angeordnete Sensoreinrichtung mit Sensormitteln zum Vermessen der Wulsthöhe der Schweißnaht in Bewegungsrichtung des Bearbeitungswerkzeuges im Abstand vor dem und/oder hinter dem Bearbeitungswerkzeug vorgesehen. Mithilfe der Sensoreinrichtung und den in Bewegungsrichtung vor dem Bearbeitungswerkzeug und hinter dem Bearbeitungswerkzeug angeordneten bevorzugt optischen Sensoren als Sensormittel, wird die Wulsthöhe der Schweißnaht vor und nach dem Glätten der Schweißnaht vermessen beziehungsweise ermittelt. Mit der Sensoreinrichtung ist somit während der Bearbeitung der Schweißnaht gleichzeitig eine Überwachung der mittels der Hammer-Einrichtung bewirkten Verformung an der Oberseite der Schweißnaht möglich. Das Erfassen der Wulsthöhe erfolgt bevorzugt kontinuierlich mithilfe von optischen Sensoren, mit denen an einer jeweiligen Messstelle das Differenzmaß ermittelt wird, mit dem die Schweißnaht vor dem Hämmern an der jeweiligen Position über die Oberflächen der miteinander verschweißten Bauteile vorsteht.

Gemäß einer bevorzugten Weiterbildung der Erfindung ist eine vorzugsweise an der Fahreinheit angeordnete elektronische Steuereinrichtung vorgesehen mit zumindest einer Auswerteinheit zum Ermitteln von zumindest der für den Vorgang des Hämmerns benötigten Schlagdauer an einer Bearbeitungsposition der Schweißnaht, auf Grundlage der von der Sensoreinrichtung jeweils vor und/oder nach der jeweiligen Bearbeitungsposition gemessenen Wulsthöhe der Schweißnaht. Mittels der bevorzugt an der Fahreinheit vorgesehenen elektronischen Steuereinrichtung, in Form vorzugsweise eines rechnergestützten Steuersystems, kann eine gezielte Ansteuerung der Fahreinheit, in Bezug auf die an einer jeweiligen Position aufzubringende Schlagdauer und einer damit verbundenen Verweilzeit an der jeweiligen Bearbeitungsposition, vorgenommen werden. Insbesondere werden mittels der elektronischen Steuereinrichtung Steuersignale an die Fahreinheit der erfindungsgemäßen Vorrichtung ausgegeben. Über die ausgegebenen Signale wird insbesondere Einfluss auf die Geschwindigkeit der Verfahrbewegung der Hammer-Einrichtung und damit des Bearbeitungswerkzeuges in Verfahrrichtung oberhalb der Schweißnaht genommen.

Gemäß einer bevorzugten Ausgestaltung der erfindungsgemäßen Vorrichtung zum Glätten von Schweißnähten ist eine Führungseinrichtung zum Führen der Fahreinheit und der Hammer-Einrichtung im Wesentlichen entlang der Schweißnaht vorgesehen, wobei die Führungseinrichtung mit wenigstens einem der Bauteile, insbesondere im Verbindungsbereich der Bauteile, koppelbar ist. Über die Führungseinrichtung wird die Fahreinheit und die bevorzugt an der Fahreinheit fest angeordnete Hammer-Einrichtung während der Bearbeitung der Schweißnaht zumindest in Längsrichtung der Schweißnaht geführt gehalten. Das Bearbeitungswerkzeug erhält somit durch die Führungseinrichtung eine Grund- bzw. Vorausrichtung zu der zu bearbeitenden Schweißnaht. Die Führungseinrichtung weist bevorzugt ein Führungsteil auf, mit dem damit in Eingriff stehende Führungsmittel der Fahreinheit korrespondieren. Die Führungseinrichtung wird entweder von Hand oder maschinell entlang der zu bearbeitenden Schweißnaht ausgerichtet und anschließend über Kopplungsmittel an einem der Bauteile fixiert. Zum reversiblen Koppeln der Führungseinrichtung an einem der Bauteile ist vorzugsweise eine Klemm- oder Spanneinrichtung vorgesehen.

Vorzugsweise weist die Führungseinrichtung einen oder mehrere Schienenkörper auf, entlang derer ein oder mehrere in der Fahreinheit angeordnete Führungsmittel, vorzugsweise Führungsrollen, beweglich geführt sind. Die Verwendung eines bevorzugt ringförmigen Schienenkörpers stellt eine einfache Möglichkeit der Ausgestaltung einer Führungseinrichtung dar, mithilfe derer eine positionsgenaue Ausrichtung der Fahreinheit zu der zu bearbeitenden Schweißnaht möglich ist. Über die am ringförmigen Schienenkörper angeordnete Klemm- bzw. Spanneinrichtung werden bevorzugt die freien Enden des Schienenkörpers zusammengezogen. Mit dem Zusammenziehen wird der Durchmesser des Schienenkörpers verringert und der Schienenkörper legt sich um die äußere Wandung eines als Rohrstruktur oder Rohrleitung ausgebildeten Bauteils. Die Fahreinheit, welche vorzugsweise als Fahrwagen ausgebildet ist, weist vorzugsweise mehrere Führungsrollen auf, welche auf bevorzugt einander gegenüber liegenden Seiten des Schienenkörpers angeordnet sind. Bevorzugt weist der Schienenkörper eine Krümmung auf, wobei die an der Fahreinheit angeordneten Führungsrollen eine entsprechend an den Krümmungsradius des Schienenkörpers angepasste Ausrichtung ihrer Drehachsen aufweisen. Die Drehachsen von Führungsrollen, welche im Abstand zueinander entlang des Schienenkörpers an der Fahreinheit angeordnet sind, verlaufen in Winkeln geneigt zueinander.

Die Fahreinheit weist bevorzugt mindestens ein Antriebselement auf, das mit der Führungseinrichtung für eine Fahrbewegung entlang der Führungseinrichtung gekoppelt ist. Das Antriebselement, was bevorzugt als Elektromotor ausgebildet ist, greift abtriebsseitig mit einem Übertragungselement, wie beispielsweise einem Zahnrad in einen komplementär ausgebildeten Abschnitt des Schienenkörpers ein. Bei einer mittels des Elektromotors erzeugten Drehbewegung erfolgt eine Umwandlung in eine Translationsbewegung der Fahreinheit. In Abhängigkeit von der Ausgestaltung des Schienenkörpers wird die Fahreinheit entlang beispielsweise einer Geraden oder gekrümmten Bewegungsbahn verfahren. Alternativ kann das Antriebselement auch vorzugsweise über ein Koppelgetriebe mit einer der Führungsrollen drehgebend verbunden sein, wobei das Kopplungsgetriebe ein Übersetzungsverhältnis bevorzugt < 1 aufweist.

Eine alternative Ausgestaltung der erfindungsgemäßen Vorrichtung sieht anstelle einer Ausbildung der Fahreinheit als ein entlang eines Schienenkörpers geführten Fahrwagen vor, dass die Fahreinheit an einem durch das Innere einer Rohrstruktur oder -leitung bewegbaren Grundkörper angeordnet ist, wobei der Grundkörper bezogen auf seine Längsachse, vorzugsweise radial nach außen abstehende Antriebseinheiten für eine Fahrbewegung der Vorrichtung entlang der Rohrinnenseite aufweist, wobei die Hammer-Einrichtung über die Fahreinheit beweglich an dem Grundkörper angeordnet ist. Insbesondere bei der Bearbeitung von Schweißnähten auf der Rohrinnenseite von Rohrstrukturen oder Rohrleitungen, weist die erfindungsgemäße Vorrichtung einen in die Rohrleitung einsetzbaren Grundkörper auf, der mithilfe vorzugsweise mehrerer in Richtung der Oberfläche der Rohrinnenseite abstehenden Antriebseinheiten innerhalb des Rohres verfahrbar ausgebildet ist. Zu dem Grundkörper, der ein Gehäuse aufweist, ist die Fahreinheit zusammen mit der Hammer-Einrichtung relativ beweglich angeordnet. Während der Relativbewegung der Fahreinheit zum Grundkörper wird die Hammer-Einrichtung bevorzugt auf einer Kreisbahn um die Grundkörper-Längsachse entlang der Schweißnaht an einer Innenseite der Rohrstruktur oder -leitung bewegt. Dabei glättet das mittels der Hammer-Einrichtung gehaltene Bearbeitungswerkzeug zumindest die Schweißnaht auf der Innenseite. Vorzugsweise wird eine als Stumpfnaht ausgebidlete Schweißnaht auf der Innenseite der Rohrleitung derart bearbeitet, dass diese, bezogen auf die benachbarten Oberflächenbereiche der mittels der Schweißnaht verbundenen Bauteile nicht nach innen vorsteht. Bevorzugt weist der Grundkörper drei, vier oder mehr Antriebseinheiten auf, welche vorzugsweise gleichmäßig über den Umfang verteilt angeordnet und eingerichtet sind, eine Fahrbewegung der Vorrichtung in Längsrichtung der Rohrleitung zu erzeugen. Jede Antriebseinheit ist bevorzugt beweglich am Grundkörper aufgehängt, wobei die jeweils ähnlich einem Fahrwerk ausgebildeten Antriebseinheiten über Federelemente radial nach außen gedrückt werden. Über die Aufhängung der bevorzugt jeweils separat angetriebenen Antriebseinheiten wird während des Verfahrens zum einen eine selbsttätige Ausrichtung des Grundkörpers innerhalb des Rohres und gleichzeitig eine sichere Kraftübertragung der durch die Antriebseinheiten erzeugten Antriebsbewegung auf die Rohrinnenseite der Rohrleitung gewährleistet.

Vorzugsweise weist die Fahreinheit einen an einem Ende des Grundkörpers drehbar angelenkten Schwenkarm auf, an dem die Hammer-Einrichtung mit ihrem Bearbeitungswerkzeug zum Glätten der Schweißnaht angeordnet ist. Mit dem Schwenkarm, der während des Hämmerns um eine parallel zur Längsachse der Rohrstruktur oder -leitung, vorzugsweise eine deckungsgleich zur Längsachse der Rohrleitung angeordnete Drehachse am Grundkörper aufgenommen ist, wird die Hammer-Einrichtung nahezu in einem gleichmäßigen Abstand zur Innenseite der Rohrleitung bewegt wird. Um Unterschiede bzw. Abweichungen im Durchmesser der zu bearbeitenden Rohrstrukturen oder Rohrleitungen ausgleichen zu können, ist der Schwenkarm teleskopierbar ausgebildet, wodurch dessen Länge jeweils individuell an den Durchmesser der Rohrleitung und einer entlang der Rohrinnenseite zu bearbeitenden Schweißnaht angepasst werden kann.

Vorzugsweise ist der Schwingkopf der Hammer-Einrichtung über ein Schwenkgelenk mit dem Schwenkarm gekoppelt, wodurch das Bearbeitungswerkzeug beziehungsweise der Winkel, mit dem das Bearbeitungswerkzeug auf die jeweilige Bearbeitungsposition des Schweißnahtabschnittes auftrifft, in einem Bereich von 45° bis 90° zur Oberfläche des jeweiligen Schweißnahtabschnittes verändert werden kann. In dem das Bearbeitungswerkzeug in eine vorbestimmte Ausrichtung zu einem jeweils zu glättenden Abschnitt der Schweißnaht gebracht wird, kann eine gezielt Materialverdrängung durch das Bearbeitungswerkzeug in eine vorbestimmte Richtung beispielsweise quer oder längs der Schweißnaht vorgenommen werden. Die Hammer-Einrichtung ist vorzugsweise über ein motorisch angesteuertes Schwenkgelenk mit dem Schwenkarm gekoppelt, um die Ausrichtung der bevorzugt geradlinigen Bewegungsbahn, auf der sich das Bearbeitungswerkzeug bewegt, winkelgenau einstellen zu können.

Vorzugsweise ist an dem Grundkörper der erfindungsgemäßen Vorrichtung eine Arretiereinrichtung zum Festsetzen der Vorrichtung innerhalb der Rohrleitung während des Hämmerns der Schweißnaht angeordnet. Mithilfe der Arretiereinrichtung wird die Vorrichtung während des Hämmerns innerhalb der Rohrleitung fixiert. Darüber ist eine wirksame Krafteinleitung der durch das Bearbeitungswerkzeuges ausgeführten Hammer-Bewegung auf den jeweiligen Schweißnahtabschnitt sichergestellt. Darüber hinaus ist eine positionstreue Ausrichtung der Hammer-Einrichtung und des darüber aufgenommenen Werkzeuges während des Hämmerns der zu bearbeitenden Schweißnaht gewährleistet. Beispielsweise kann mittels der über den Umfang des Grundkörpers verteilt angeordneten Antriebseinheiten eine Arretierwirkung innerhalb der Rohrleitung umgesetzt werden. Die Antriebseinheiten sind dazu mit Feststellbremsen ausgerüstet und bevorzugt wird die Beweglichkeit der vorzugsweise federnden Aufhängung für die Antriebseinheiten zum Grundkörper aufgehoben.

Eine bevorzugte Weiterbildung der erfindungsgemäßen Vorrichtung sieht vor, dass die Arretiereinrichtung mehrere über den Umfang des Grundkörpers verteilt angeordnete, sich radial zur Längsachse des Grundkörpers verstellbare Stützelemente aufweist. Am Grundkörper sind vorzugsweise separat zu den Antriebseinheiten angeordnete Stützelemente vorgesehen, welche zum Fixieren der erfindungsgemäßen Vorrichtung innerhalb einer Rohrstruktur oder -leitung bevorzugt radial nach außen ausgefahren werden. Die vorzugsweise freien Enden der Stützelemente mit ihren Anpressfüßen werden jeweils mit einer konstanten Kraft beaufschlagt, wodurch eine selbsttätige Ausrichtung des Grundkörpers innerhalb der Rohrleitung gewährleistet wird. Vorzugsweise kommen drei, vier oder fünf Stützelemente zum Einsatz. Die Stützelemente sind vorzugsweise als pneumatisch oder hydraulisch betriebene Hubzylinder ausgebildet. Vorzugsweise werden die Stützelemente über einen gemeinsamen Fluidkreislauf angesteuert, was die koaxiale Ausrichtung der Grundkörper-Längsachse zur Mittenachse der Rohrleitung sicherstellt.

Ein weiterer Aspekt der Erfindung bezieht sich auf eine Vorrichtung zum Herstellen eines sich aus mindestens zwei Bauteilen zusammensetzenden Strukturteiles, mit einer Schweißmaschine zum Erzeugen einer Schweißnaht zwischen mindestens zwei mittels der Schweißnaht miteinander verbindbaren Bauteilen, wobei eine der Schweißmaschine nachgeordnete Vorrichtung zum Schweißnahtglätten nach einem der vorstehend beschriebenen bevorzugten Ausführungsformen zum Glätten einer durch die Schweißmaschine erzeugten Schweißnaht vorgesehen ist. Mit einer der Schweißmaschine nachgeschaltet angeordneten Vorrichtung zum Glätten einer Schweißnaht lässt sich eine erzeugte Schweißnaht im Verbindungsbereich zweier Bauteile auf einfache Weise glätten, ohne einen Materialabtrag im Verbindungsbereich der Bauteile vornehmen zu müssen. Unregelmäßigkeiten in der Oberfläche der Schweißnaht können durch das Hämmern zumindest vergleichmäßigt werden, wobei durch die zusammen mit der Bearbeitung der Schweißnaht vorgenommene Materialverdrängung vorzugsweise Spitzen der Schweißnaht abgeflacht und Täler der Schweißnaht angehoben werden. Zudem erfolgt zumindest an den Oberflächenbereichen der Schweißnaht eine Materialverdichtung, wodurch beim Schweißen entstandene Poren, beziehungsweise Risse, geschlossen werden. Damit kann der Entstehung möglicher Korrosionsnester entgegengewirkt werden. Hinsichtlich weiterer bevorzugter Ausgestaltungen der im Zusammenhang mit dem Schweißverfahren eingesetzten Vorrichtung zum Glätten von Schweißnähten wird auf die oben stehenden Ausführungen zum erfindungsgemäßen Verfahren und zur Vorrichtung zum Glätten von Schweißnähten verwiesen.

Anstelle von orbital an Rohrstrukturen arbeitenden Schweißmaschinen kann die erfindungsgemäße Vorrichtung mit ihrer Hammer-Einrichtung und ihrer Steuereinrichtung auch an den Schweißwagen der Großkomponentenfertigung z.B. im Schiffbau eingesetzt werden. Solche Schweißwagen verschweißen großformatige Stahlplatten in automatisierten Verfahren zu Komponenten, aus denen Großsektionen zusammengesetzt werden. Dabei wird auch hier die Vorrichtung mit ihrer Hammer-Einrichtung in den Schweißwagen integriert, der nach der Verknüpfung der Bauteile die Nachbearbeitung der Nähte durchführt. Durch die Anwendung dieser Methode kann die Festigkeit von hochbelasteten Großbauteilen vor allem in kritischen Bereichen erheblich verbessert werden. Gleichzeitig wird ein effektiverer Schutz gegen Korrosion erreicht.

Des Weiteren bezieht sich die Erfindung auch auf eine Verwendung einer Vorrichtung nach einem der vorstehend beschriebenen bevorzugten Ausführungsformen zum Glätten einer Schweißnaht im Verbindungsbereich zweier Bauteile einer Gründungsstruktur einer Offshore-Anlage, vorzugsweise einer Windenergieanlage. Speziell Gründungsstrukturen, wie beispielsweise Jacket-Strukturen, welche zur Offshore-Gründung von zum Beispiel Windenergieanlagen eingesetzt werden, weisen eine Vielzahl von Schweißnähten auf, mit denen die verschiedenen Stütz- und Verbindungsstreben einer herzustellenden Gitterstruktur der Jacket-Struktur untereinander verbunden werden. Mithilfe der erfindungsgemäßen Vorrichtung, mit der zum Glätten der Schweißnähte diese mittels eines Bearbeitungswerkzeuges gehämmert werden, kann eine bevorzugt glatte Oberfläche im Bereich der Schweißnähte erzeugt werden, auf der mögliche aufzutragende Korrosionsbeschichtungen fest und sicher anhaften. Des Weiteren erfolgt, im Gegensatz zu den bekannten Verfahren, durch das Hämmern der Schweißnaht kein Materialabtrag im Verbindungsbereich der Bauteile, wodurch eine mögliche Schwächung der die Bauteile verbindenden Schweißnähte vermieden werden kann. Damit wird die maximale Betriebsdauer der mittels der erfindungsgemäßen Vorrichtung bearbeiteten Gründungsstrukturen, welche während ihres Einsatzes wechselnden dynamischen Belastungen ausgesetzt sind, ohne eine Schwächung des strukturellen Zusammenhalts der Gründungsstruktur hervorzurufen, auf vorteilhafte Weise verlängert.

Vorzugsweise ist die Verwendung der erfindungsgemäßen Vorrichtung an einer Schweißnaht im Verbindungsbereich zweier vorzugsweise stumpf miteinander verschweißter Bauteile vorgesehen, welche gehämmert wird, wobei die Bauteile im Verbindungsbereich unterschiedliche Materialdicken aufweisen. Durch die erfindungsgemäße Verwendung können nunmehr Bauteile mittels einer Stumpfnaht miteinander verschweißt werden, welche Wandflächen aufweisen, die zumindest einseitig einen Versatz zueinander haben. Durch das Hämmern der Schweißnaht wird die Kerbwirkung an dem sprungartigen Übergang bzw Versatz zwischen den Wandflächen der beiden miteinander verschweißten Bauteile verringert.

Nachfolgend wird die Erfindung anhand möglicher Ausführungsbeispiele der Vorrichtung und des erfindungsgemäßen Verfahrens unter Bezugnahme auf die beigefügten Figuren näher beschrieben. Hierbei zeigen:
- Fig. 1: eine perspektivische Ansicht einer ersten Ausführungsform einer Vorrichtung zum Glätten einer Schweißnaht;
- Fig. 2: eine perspektivische Detailansicht der erfindungsgemäßen Vorrichtung nach Fig. 1;
- Fig. 3: eine perspektivische Ansicht eines zweiten Ausführungsbeispiels einer Vorrichtung zum Glätten von Schweißnähten in einem ersten Anwendungsfall;
- Fig. 4: eine perspektivische Ansicht der erfindungsgemäßen Vorrichtung nach Fig. 3 in einem zweiten Anwendungsfall;
- Fig. 5: eine Detailansicht einer erfindungsgemäßen Hammer-Einrichtung gemäß dem ersten Anwendungsfall nach Fig. 3, und
- Fig. 6: eine Schnittdarstellung zweier miteinander verschweißter Bauteile mit unterschiedlichen Wanddicken.

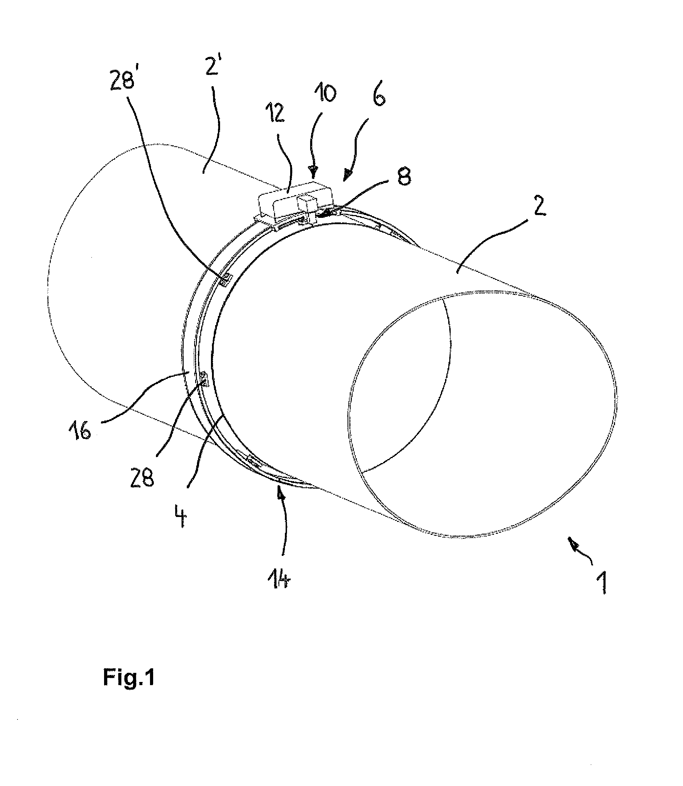

Fig. 1 zeigt eine Rohrstruktur oder Rohrleitung 1 bestehend aus zwei Rohrabschnitten oder Rohrleitungsabschnitten, auch im Weiteren als Bauteile 2, 2' bezeichnet, welche mittels einer Schweißnaht 4 miteinander verbunden sind. Die Bauteile 2, 2' können Teil einer Gründungsstruktur für Windenergieanlagen, insbesondere Offshore-Windenergieanlagen, insbesondere einer fachwerkartigen Struktur, einer sog. Jacket-Struktur, oder alternativ auch Teil einer Rohrleitung sein.

Im Verbindungsbereich der Bauteile 2, 2' ist eine Vorrichtung 6 zum Glätten der Schweißnaht angeordnet. Die Vorrichtung 6 weist eine Hammer-Einrichtung 8 zum Hämmern der Schweißnaht 4 und eine Fahreinheit 10 zum Bewegen von zumindest der Hammer-Einrichtung 8 entlang der Schweißnaht 4 auf. Die Fahreinheit 10 weist weiter ein innerhalb eines Gehäuses 12 der Vorrichtung 6 angeordnetes, nicht näher gezeigtes Antriebsmittel auf, mittels dem die Fahreinheit 10 entlang der Schweißnaht bewegt wird. Die Vorrichtung 6 weist weiterhin eine Führungseinrichtung 14 auf, mittels derer die Fahreinheit 10 und die an der Fahreinheit 10 angeordnete Hammer-Einrichtung 8 entlang der Schweißnaht 4 geführt werden. Die Führungseinrichtung 14 umfasst einen Schienenkörper 16, der mit dem Bauteil 2' gekoppelt, insbesondere an dem Bauteil 2' angeordnet ist. Während sich die Fahreinheit 10 entlang des Schienenkörpers 16 der Führungseinrichtung 14 bewegt, bearbeitet die Hammer-Einrichtung 8 die Oberfläche der üblicherweise nach dem Schweißvorgang an den Oberflächen der miteinander verbundenen Bauteile 2, 2' vorstehenden Schweißnaht 4. Dabei wird die Oberfläche, beziehungsweise die oberen Schichten der Schweißnaht 4 verformt, sodass zumindest eine Glättung der oberen Schichten der Schweißnaht bewirkt ist. Spitzen oder Berge der Schweißnaht 4 werden herunter gehämmert und das Schweißnaht-Material in benachbarte Täler der Schweißnaht getrieben, wodurch die Täler in der Schweißnaht 4 angehoben werden.

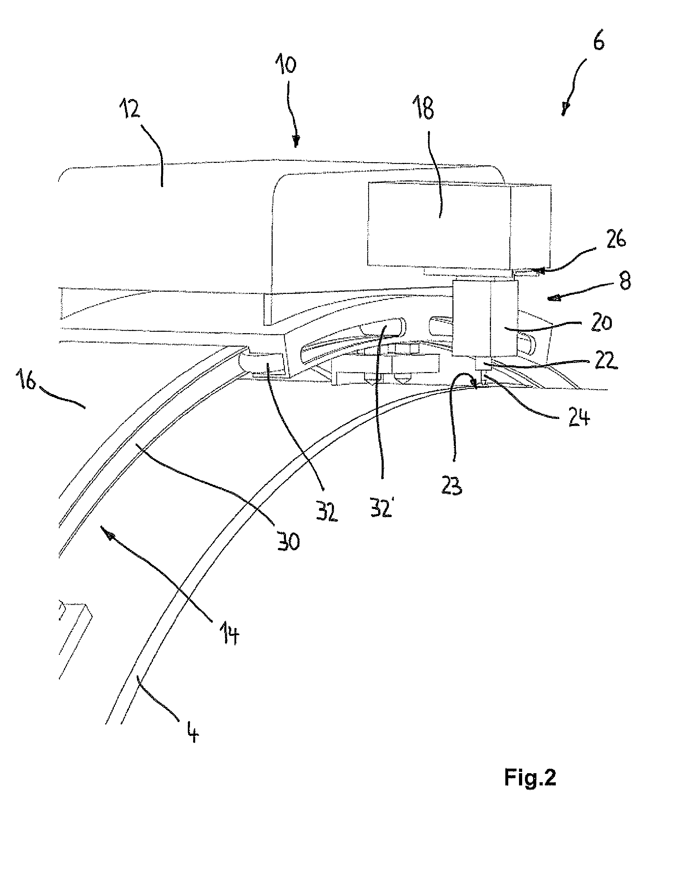

In Fig. 2 ist eine Detailansicht der erfindungsgemäßen Vorrichtung 6 gezeigt, um deren Aufbau zu verdeutlichen. An der Fahreinheit 10 der Vorrichtung 6 ist ein feststehender Ausleger 18 angeordnet, an dem die Hammer-Einrichtung 8 angeordnet ist. Die Hammer-Einrichtung 8 weist einen Schwingungserzeuger 20 mit einem Schwingkopf 22 und einem darin aufgenommenen Bearbeitungswerkzeug 24 auf. Der Schwingungserzeuger 20 ist eingerichtet, den Schwingkopf 22 und das darüber aufgenommene Bearbeitungswerkzeug 24 in eine periodische Bewegung mit einer Frequenz in einem Bereich von 100 bis 250 Hz zu versetzen. Mit der sich periodisch wiederholenden Bearbeitungsbewegung hämmert das Bearbeitungswerkzeug auf die Oberfläche der Schweißnaht und gegebenenfalls auf den Übergangsbereich zwischen Schweißnaht 4 und den angrenzenden Bauteilen 2, 2'. Wie Fig. 2 zeigt, wird die Oberfläche der Schweißnaht 4 derart bearbeitet, dass diese nicht nur geglättet, sondern soweit verformt wird, dass ein ebener Übergangsbereich 23 zwischen den Oberflächen der Bauteile 2, 2' und der Oberfläche der Schweißnaht 4 erreicht ist. Wie aus Fig. 2 ersichtlich, ist die Hammerfläche des Bearbeitungswerkzeuges 24 kleiner als die Breite der Schweißnaht 4. Der Schwingungserzeuger 20 ist an dem Ausleger 18 in einer Linearführung 26 gehalten, mittels der die Hammer-Einrichtung 8 und damit der Schwingkopf 22 quer zur Erstreckungsrichtung der Schweißnaht 4 verstellbar an der Fahreinheit 10 aufgenommen ist.

Der Schienenkörper 16 der Führungseinrichtung 14 ist ringförmig ausgebildet. Dessen freie Enden werden mittels einer nicht näher gezeigten Klemm- oder Spanneinrichtung zusammengezogen, wodurch die Aufstellfüße 28, 28' (Fig.1) am Schienenkörper 16 auf die Außenseite des Bauteils 2' gedrückt werden. Der Schienenkörper 16 weist zudem Führungsnuten 30 für darin geführte Führungsrollen 32, 32' auf, welche an der Fahreinheit 10 angeordnet sind. Um eine verringerte Reibung während des Abrollens der Führungsrollen 32, 32' in den Führungsnuten 30 des Schienenkörpers zu gewährleisten, weisen die Führungsrollen 32, 32' Drehachsen auf, die in Abhängigkeit vom Durchmesser der zu bearbeitenden Schweißnaht in einem Winkel in einem Bereich von etwa 1° bis 15° Grad zueinander ausgerichtet sind. Das nicht näher dargestellte Antriebselement der Fahreinheit ist mit einem der Führungsrollen 32, 32' drehgebend gekoppelt.

Das über den Schwingkopf aufgenommene Bearbeitungswerkzeug 24 ist ein Hartmetallstift mit einer abgerundeten oder kugelförmigen Hammerfläche. An der Hammer-Einrichtung 8 ist zudem eine nicht näher dargestellte Sensoreinrichtung mit Sensormitteln zum Vermessen der Wulsthöhe der Schweißnaht 4 in Bewegungsrichtung des Bearbeitungswerkzeuges 24 im Abstand vor dem und/oder hinter dem Bearbeitungswerkzeug vorgesehen.

Eine elektronische Steuereinrichtung mit zumindest einer Auswerteinheit zum Ermitteln von zumindest der für den Vorgang des Hämmerns benötigten Schlagdauer an einer jeweiligen Bearbeitungsposition der Schweißnaht 4 ist innerhalb des Gehäuses 12 der Fahreinheit 10 angeordnet. Die Schlagdauer und die Verweilzeit des Bearbeitungswerkzeuges 24 an der momentanen Bearbeitungsposition bzw. die Fahrgeschwindigkeit der Fahreinheit 10 entlang der Führungseinrichtung wird auf Grundlage der von der Sensoreinrichtung jeweils zuvor an oder vor und/oder hinter der jeweiligen Bearbeitungsposition gemessenen Wulsthöhe der Schweißnaht 4 berechnet. Die Fahreinheit 10 ist vorliegend als Fahrwagen ausgebildet.

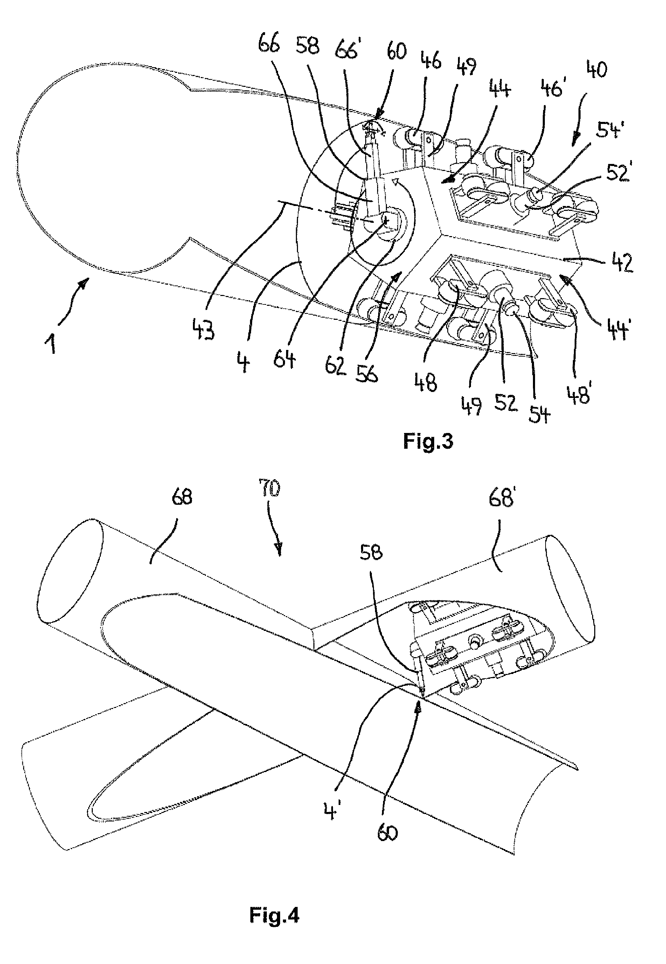

Fig. 3 zeigt ein weiteres Ausführungsbeispiel einer erfindungsgemäßen Vorrichtung 40, welche im zweiten Anwendungsfall das Glätten einer Schweißnaht 4 auf der Innenseite der Rohrstruktur 1 oder Rohrleitung 1 übernimmt. Die Vorrichtung 40 weist einen Grundkörper 42 in der Form eines fünfeckigen, geraden Prismas mit ebenen Seitenflächen 44, 44' auf. An jeder der Seitenflächen 44, 44' des Grundkörpers 42 sind radial nach außen abstehende Antriebseinheiten 46, 46', 48, 48' angeordnet. Mit den Antriebseinheiten 46, 46', 48, 48' wird eine Fahrbewegung der Vorrichtung 40 entlang der Rohrinnenseite umgesetzt. Die Antriebseinheiten 46, 46', 48, 48' sind jeweils ähnlich einem Fahrwerk ausgebildet und über eine Aufhängung 49 im Abstand zur Längsachse 43 des Grundkörpers 42 veränderlich aufgenommen. An der Aufhängung 49 jeder Antriebseinheit 46, 46', 48, 48' ist ein Federelement vorgesehen, das eine radial nach außen gerichtete Federkraft auf die Antriebseinheiten 46, 46', 48, 48' ausübt. Zudem ist am Grundkörper eine Arretiereinrichtung 50 zum Festsetzen der Vorrichtung an der Rohrinnenseite der Rohrstruktur 1 oder Rohrleitung 1 während des Hämmerns der als Stumpfnaht ausgebildeten Schweißnaht 4. Die Arretiereinrichtung 50 weist jeweils an den Seitenflächen 44, 44' des Grundkörpers 42 radial zur Längsachse des Grundkörpers 42 verstellbare Stützelemente 52, 52' mit Anpressfüßen 54, 54' zum in Anlage bringen mit der Rohrinnenseite der Rohrstruktur 1 auf.

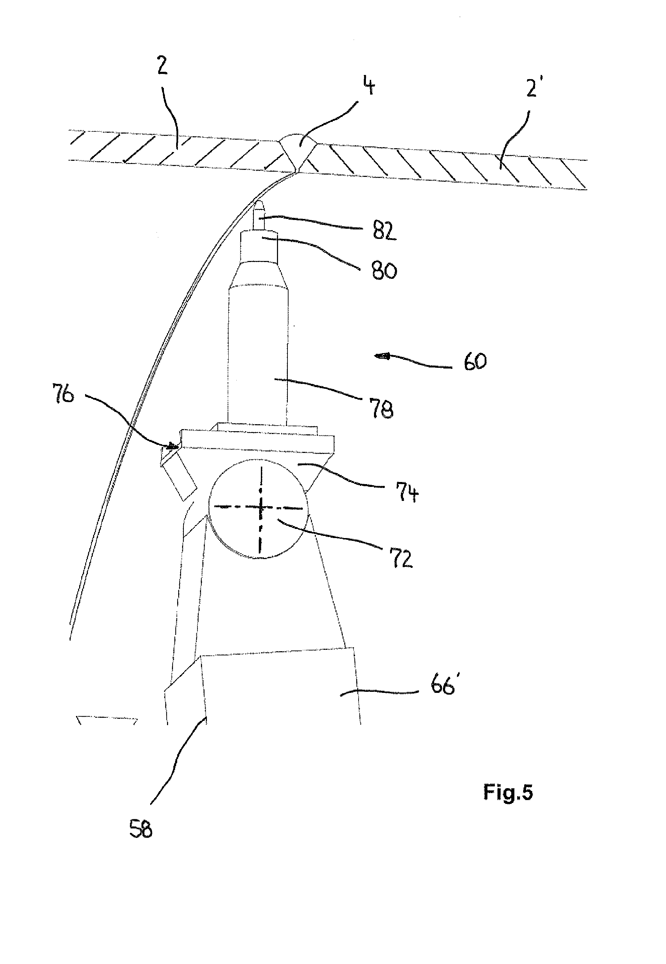

An der Stirnseite 56 ist eine als Schwenkarm 58 ausgebildete Fahreinheit 10' zum Bewegen der Hammer-Einrichtung 60 entlang der Schweißnaht 4 auf deren Innenseite angeordnet. Der Schwenkarm 58 ist über ein Drehlager 62 rotatorisch um die Längsachse des Grundkörpers 42 aufgenommen. Des Weiteren ist der Schwenkarm 58 über ein Schwenklager 64 in seiner Neigung beziehungsweise Ausrichtung zur Längsachse 43 des Grundkörpers 42 veränderbar. Der Schwenkarm 58 weist zwei beweglich zueinander gehaltene Armabschnitte 66, 66' auf, wodurch der Schwenkarm teleskopierbar ist. Am freien Ende des Schwenkarmes ist die Hammer-Einrichtung 60 angeordnet. Die genauere Anordnung beziehungsweise Ausgestaltung der Hammer-Einrichtung 60 wird nachfolgend zur Fig. 5 beschrieben. Der vorliegende Anwendungsfall beschreibt den Einsatz einer erfindungsgemäßen Vorrichtung 60 an einer Stumpfnaht im Verbindungsbereich von zwei stumpf aneinander gesetzten Bauteilen 2, 2'.

In Fig. 4 ist ein weiterer Anwendungsfall zum Einsatz der erfindungsgemäßen Vorrichtung 40 gezeigt, welcher das Hämmern einer insbesondere als Kehlnaht ausgebildeten Schweißnaht 4' im Verbindungsbereich von zwei unter einem Winkel zueinander verlaufenden rohrartigen Stützstreben (Bauteile 68, 68') einer Fachwerkstruktur 70 für eine nicht näher gezeigte Gründungsstruktur darstellt. Aufgrund des erschwerten Zugangs der Schweißnaht 4 von der Innenseite des Bauteils 68 aus, ist es erforderlich, dass der Schwenkarm 58 in verschiedenen Freiheitsgraden beweglich am Grundkörper aufgenommen ist, um eine optimale Ausrichtung der am Ende des Schwenkarmes angeordneten Hammer-Einrichtung 60 zu der zu bearbeitenden Schweißnaht zu ermöglichen. Insbesondere bei Kehlnähten, ist es im Gegensatz zu Stumpfnähten entscheidend, einen gleichmäßigen Übergang vom Bauteil 68 zur Schweißnaht 4'und von der Schweißnaht 4' zum angrenzenden Bauteil 68' zu erzeugen. Die in Fig. 4 gezeigte Vorrichtung 40 ist identisch zu der in Fig. 3 gezeigten Vorrichtung zum Glätten von Schweißnähten ausgebildet und umfasst sämtliche der zu Fig. 3 angeführten, konstruktiven Merkmale.

Fig. 5 zeigt eine Detailansicht der am freien Ende des Schwenkarms 58 angeordneten Hammer-Einrichtung 60. Am Ende des Schwenkarmes 58 ist ein als Schwenklager ausgebildetes Ausrichtlager 72 angeordnet. Über das Ausrichtlager 72 kann die Ausrichtung der Hammer-Einrichtung 60 zur Längsachse des Schwenkarmes 58 verändert werden. An dem beweglich zum Schwenkarm 58 angeordneten Lagerteil 74 des Ausrichtlagers 72 ist eine Linearführung 76 angeordnet, mit der die Hammer-Einrichtung 60 relativ zur Drehachse des Ausrichtlagers 72 verschieblich aufgenommen ist. Dadurch ist zum einen erreicht, dass die Hammer-Einrichtung 60 quer zur Erstreckungsrichtung der Schweißnaht verstellbar ist. Zum anderen ist gewährleistet, dass die Hammer-Einrichtung 60 in jede beliebige Position relativ zum Grundkörper 42 der Vorrichtung 40 an der Innenseite einer Rohrstruktur 1 gebracht werden kann. Die Hammer-Einrichtung 60 weist einen Schwingungserzeuger 78 auf, mittels dem der Schwingkopf 80 und das darüber aufgenommene Bearbeitungswerkzeug 82 in eine periodische Bewegung versetzt wird. Das als Hartmetallstift mit einer abgerundeten oder kugelförmigen Bearbeitungsfläche ausgebildete Bearbeitungswerkzeug 82 wird zum Ausführen der Hämmer-Bewegung entlang einer Bewegungsache bewegt, wobei die Bewegungsachse zur Oberfläche eines unmittelbar zugeordneten Bearbeitungsabschnitts der Schweißnaht 4 im Wesentlichen senkrecht dazu ausgerichtet ist. Jedoch ist die Ausrichtung der Bewegungsachse des Bearbeitungswerkzeuges 78 durch den Schwenkarm 58 in einem Winkelbereich von 45° bis 90° Grad zur Oberfläche des Bearbeitungsabschnittes veränderbar. Damit ist erreicht, dass das Material der Schweißnaht in eine vorbestimmte Richtung getrieben werden kann.

Nachfolgend wird das Verfahren zum Glätten einer Schweißnaht (4, 4') im Verbindungsbereich von zwei mittels der Schweißnaht (4, 4') miteinander verbundenen Bauteilen (2, 2', 68, 68') näher beschrieben. Das Verfahren umfasst zumindest den Schritt des Hämmern der Schweißnaht (4, 4') mittels eines oder mehrerer maschinell angetriebener Bearbeitungswerkzeuge (24, 82), wobei gleichzeitig das Bearbeitungswerkzeugs (24, 82) im Wesentlichen entlang der Schweißnaht (4, 4') bewegt wird. Das Bearbeitungswerkzeugs (24, 82) wird mittels einer Fahreinheit (10, 10') entlang der Schweißnaht (4, 4') bewegt. Das Bearbeitungswerkzeug (24, 82) wird so entlang der Schweißnaht geführt, dass die Schweißnaht (4, 4') durch das Hämmern über ihre gesamte Breite geglättet wird. Um eine Bearbeitung der gesamten Schweißnaht-Breite zu erreichen wird das Bearbeitungswerkzeug (24, 82) während seiner Verfahrbewegung entlang der Schweißnaht (4, 4') in vorbestimmten Abständen etwa quer zur Erstreckungsrichtung der Schweißnaht (4, 4') bewegt.

Um eine ausreichende Schlagwirkung des Bearbeitungswerkzeug (24, 82) auf dem Schweißnaht-Material zu erzielen, führt das Bearbeitungswerkzeug eine periodische Hämmer-Bewegung mit einer Frequenz im Bereich von 100 bis 250 Hertz aus, bevorzugt in einem Bereich von 150 bis 200 Hertz. Das Bearbeitungswerkzeug (24,82) wird zum Ausführen der Hämmer-Bewegung entlang einer Bewegungsbahn bewegt, wobei die Bewegungsbahn zur Oberfläche eines unmittelbar zugeordneten Bearbeitungsabschnitts der Schweißnaht (4, 4') fest oder veränderbar in einem Winkel im Bereich von 45 bis 90 Grad ausgerichtet wird.

Um sicherzustellen, dass die Schweißnaht nach dem Glätte nicht an den Oberflächen der miteinander verbundenen Bauteile vorstehen, wird die Wulsthöhe der an den Oberflächen der miteinander verschweißten Bauteile (2, 2', 68, 68') vorstehenden Schweißnaht (4, 4') in Verfahrrichtung zuvor an oder vor und/oder hinter einer momentanen Bearbeitungsposition des Bearbeitungswerkzeugs (24, 82) vermessen. Auf Grundlage der an der jeweiligen momentanen Bearbeitungsposition gemessenen Wulsthöhe der Schweißnaht (4, 4') wird daraus die für den Vorgang des Hämmerns benötigte Schlagdauer an der momentanen Bearbeitungsposition der Schweißnaht (4, 4') ermittelt bzw. bestimmt. Das Hämmern an der momentanen Bearbeitungsposition erfolgt dann auf Basis der fortwährend bzw. kontinuierlich ermittelten Schlagdauer und der sich daraus ergebenden Verweilzeit bzw. der angepassten Fahrgeschwindigkeit des Bearbeitungswerkzeugs (24, 82) an der oder oberhalb der Bearbeitungsposition der Schweißnaht (4, 4').

Um eine in Figur 4 gezeigte Fachwerkstruktur 70 an den innenseitigen Verbindungsbereichen der Bauteile 68, 68' bearbeiten zu können, wird die Vorrichtung 40 in jedes Ende der aufgesetzten Bauteile 68' eingeführt und kann die innenliegenden Schweißnähte durch den in mehreren Freiheitsgraden bewegbaren Schwenkarm 58 als Fahreinheit 10' für die Hammer-Einrichtung 60 auch dann glätten, wenn die Rohrwandungen in einem spitzen Winkel aufeinander zulaufen. Gerade bei derartigen Rohrknoten ist die Methode des Hochfrequenzhämmerns besonders sinnvoll einzusetzen, da die unterschiedlichen Kurvenausschnitte und Spaltmaße in der Schweißvorbereitung oft verlangen, das mehr Schweißgut in die Naht eingebracht werden muss, als an Stumpfnähten zwischen geraden Rohrstücken. Die an den kritischen Stellen besonders ausgeprägten Schweißnaht-Wülste können durch das Hämmern besonders ertüchtigt werden, was zu einer Vergrößerung der Haltbarkeit der Verbindungen führt.

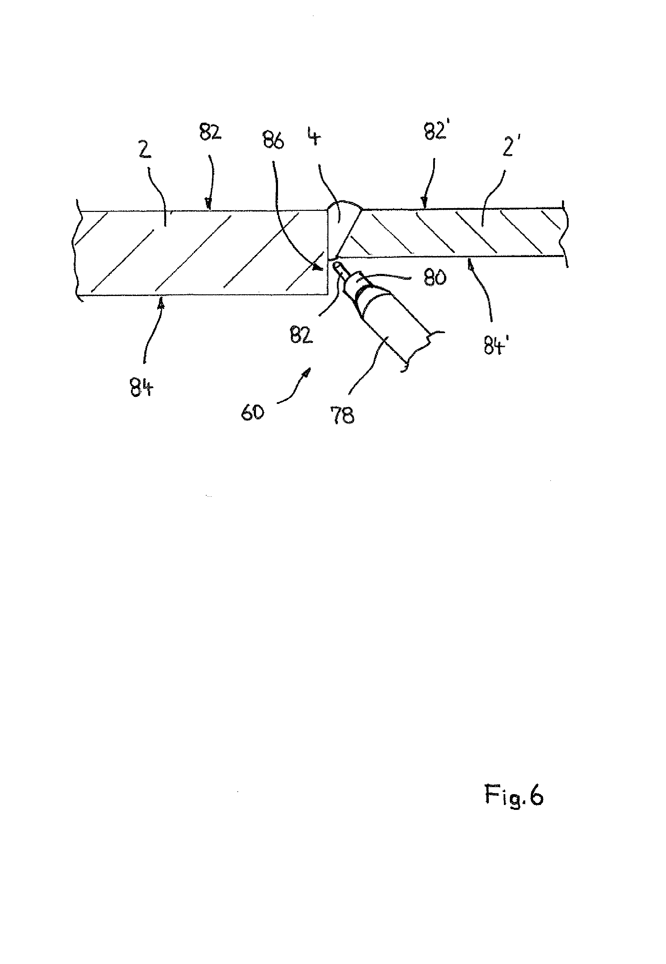

In Figur 6 ist ein Verbindungsbereich zwischen zwei Bauteilen 2, 2' gezeigt, wobei die Bauteile 2, 2' unterschiedliche Materialdicken aufweisen. Die Bauteile 2, 2' weisen Wandflächen 82, 82' auf, die in einer Ebene bzw. fluchtend zueinander verlaufen. Die Wandflächen 84, 84' weisen hingegen zueinander einen Materialdicken-Sprung bzw. -Versatz 86 auf. Mithilfe der in Figur 6 gezeigten Hammereinrichtung 60 wird die Schweißnaht 4 im Bereich des Materialdicken-Sprunges bzw. Materialdicken-Versatzes 86 derart gehämmert, dass die Kerbwirkung im Bereich des Sprunges reduziert wird. Auf ein Anpassen der Materialstärke des Bauteils 2 an die Material- bzw. Wandstärke des Bauteiles 2' im Verbindungsbereich der Bauteile 2, 2' kann somit verzichtet werden. Wie Figur 6 zeigt, weist die Hammer-Einrichtung 60 einen Schwingungserzeuger 78 mit einem Schwingkopf 80 auf. Über den Schwingkopf 80 ist das Bearbeitungswerkzeug 82 aufgenommen. Um die Schweißnaht 4 im Bereich des Materialdicken-Sprunges 86 hämmern zu können, wird die Bewegungsbahn des Bearbeitungswerkzeuges zur Wandfläche 84' und damit zur Oberfläche des Bauteils 2' in einem Winkel von etwa 45° ausgerichtet.

Nachfolgend werden bevorzugte Aspekte der vorliegenden Erfindung angegeben, unter Verwendung der vorstehend eingeführten Bezugszeichen. Die Bezugszeichen sind dabei nicht limitierend, sondern lediglich als Mittel zum Erleichtern des Leseverständnisses zu verstehen, denn die angegebenen Aspekte beziehen sich nicht ausschließlich auf die vorstehend diskutierten Figuren. Die nachfolgend angegebenen Aspekte umfassen Merkmale, die mit bevorzugten sonstigen Merkmalen kombiniert werden können, die sich aus der Beschreibung und/oder den Ansprüchen ergeben.
Aspekt 1. Verfahren zum Glätten einer Schweißnaht (4, 4') im Verbindungsbereich von zwei mittels der Schweißnaht (4, 4') miteinander verbundenen Bauteilen (2, 2', 68, 68'), wobei das Verfahren die Schritte umfasst:
   - Hämmern der Schweißnaht (4, 4') mittels eines oder mehrerer maschinell angetriebener Bearbeitungswerkzeuge (24, 82), und
   - Bewegen des Bearbeitungswerkzeugs (24, 82) im Wesentlichen entlang der Schweißnaht (4, 4').
Aspekt 2. Verfahren mit den Merkmalen von Aspekt 1,
   wobei der Schritt des Bewegens des Bearbeitungswerkzeugs (24, 82) umfasst:
   - maschinelles Bewegen des Bearbeitungswerkzeuges (24, 82) mittels einer Fahreinheit (10, 10').
Aspekt 3. Verfahren mit den Merkmalen mindestens einer der Aspekte 1 und 2,
   wobei die Schweißnaht (4, 4') durch das Hämmern über ihre gesamte Breite geglättet wird.
Aspekt 4. Verfahren mit den Merkmalen mindestens einer der Aspekte 1 bis 3,
   dadurch gekennzeichnet, dass das Bearbeitungswerkzeug (24, 82) während seiner Verfahrbewegung entlang der Schweißnaht (4, 4') in vorbestimmten Abständen etwa quer zur Erstreckungsrichtung der Schweißnaht (4, 4') bewegt wird.
Aspekt 5. Verfahren mit den Merkmalen mindestens einer der Aspekte 1 bis 4,
   dadurch gekennzeichnet, dass das Bearbeitungswerkzeug (24, 82) eine periodische Hämmer-Bewegung mit einer Frequenz im Bereich von 100 bis 250 Hertz ausführt, bevorzugt in einem Bereich von 150 bis 200 Hertz.
Aspekt 6. Verfahren nach einem der Aspekte 1 bis 4,
   dadurch gekennzeichnet, dass das Bearbeitungswerkzeug (24,82) zum Ausführen der Hämmer-Bewegung entlang einer Bewegungsbahn bewegt wird, wobei die Bewegungsbahn zur Oberfläche eines unmittelbar zugeordneten Bearbeitungsabschnitts der Schweißnaht (4, 4') fest oder veränderbar in einem Winkel im Bereich von 45 bis 90 Grad ausgerichtet wird.
Aspekt 7. Verfahren mit den Merkmalen mindestens einer der Aspekte 1 bis 6, umfassend die Schritte,
   - Vermessen einer Wulsthöhe der an den Oberflächen der miteinander verschweißten Bauteile (2, 2', 68, 68') vorstehenden Schweißnaht (4, 4') in Verfahrrichtung vor und/oder hinter einer momentanen Bearbeitungsposition des Bearbeitungswerkzeugs (24, 82),
   - Ermitteln von zumindest der für den Vorgang des Hämmerns benötigten Schlagdauer an der momentanen Bearbeitungsposition der Schweißnaht (4, 4'), auf Grundlage der an der jeweiligen momentanen Bearbeitungsposition gemessenen Wulsthöhe der Schweißnaht (4, 4'), und
   - Hämmern an der momentanen Bearbeitungsposition auf Basis der ermittelten Schlagdauer.
Aspekt 8. Verfahren mit den Merkmalen mindestens einer der Aspekte 1 bis 7,
   bei dem eine Schweißnaht (4, 4') im Verbindungsbereich zweier Bauteile (68, 68') einer Gründungsstruktur einer Offshore-Anlage, vorzugsweise einer Windenergie-Anlage, gehämmert wird.
Aspekt 9. Verfahren mit den Merkmalen mindestens einer der Aspekte 1 bis 8,
   bei dem eine Schweißnaht (4, 4') im Verbindungsbereich zweier vorzugsweise stumpf miteinander verschweißter Bauteile (2,2') gehämmert wird, wobei die Bauteile (2, 2') im Verbindungsbereich unterschiedliche Materialdicken aufweisen.
Aspekt 10. Verfahren zum Herstellen eines sich aus mindestens zwei Bauteilen (2, 2', 68, 68') zusammensetzenden Strukturteiles, umfassend die Schritte:
   - Verschweißen der Bauteile (2, 2', 68, 68'), und
   - Glätten der Schweißnaht (4, 4') nach einem Verfahren gemäß den Aspekten 1 bis 9.
Aspekt 11. Vorrichtung (6, 40) zum Glätten einer Schweißnaht (4, 4') im Verbindungsbereich von zwei mittels der Schweißnaht (4, 4') miteinander verbundenen Bauteilen (2, 2', 68, 68'), mit
   - einer Hammer-Einrichtung (24, 82) zum Hämmern der Schweißnaht (4, 4') mit einem oder mehreren angetriebenen Bearbeitungswerkzeugen (24, 82) für die Schweißnaht (4, 4'), und
   - einer Fahreinheit (10, 10') zum Bewegen der Hammer-Einrichtung (8, 60) zum Hämmern der Schweißnaht entlang der Schweißnaht (4, 4').
Aspekt 12. Vorrichtung mit den Merkmalen von Aspekt 11,
   dadurch gekennzeichnet, dass die Fahreinheit (10, 10') ein oder mehrere Antriebsmittel zum maschinellen Bewegen des Bearbeitungswerkzeuges (24, 82), insbesondere der Fahreinheit (10, 10'), entlang der Schweißnaht (4, 4') aufweist.
Aspekt 13. Vorrichtung mit den Merkmalen mindestens einer der Aspekte 11 und 12,
   dadurch gekennzeichnet, dass die Hammer-Einrichtung (8, 60) einen Schwingungserzeuger (20,78) mit einem Schwingkopf (22, 80) für das Bearbeitungswerkzeug (24, 82) zum Erzeugen einer periodischen Hämmer-Bewegung aufweist.
Aspekt 14. Vorrichtung mit den Merkmalen mindestens einer der Aspekte 11 bis 13,
   dadurch gekennzeichnet, dass das Bearbeitungswerkzeug (24, 82) ein Metallstift mit einer abgerundeten oder kugelförmigen Hammerfläche ist, wobei die Hammerfläche des Bearbeitungswerkzeuges (24, 82) vorzugsweise größer als die Breite der zu glättenden Schweißnaht (4, 4') ist.
Aspekt 15. Vorrichtung mit den Merkmalen mindestens einer der Aspekte 13 und 14,
   dadurch gekennzeichnet, dass der Schwingkopf (22, 80) etwa quer zur Erstreckungsrichtung der Schweißnaht (4, 4') verstellbar an der Fahreinheit (10, 10') aufgenommen ist.
Aspekt 16. Vorrichtung mit den Merkmalen mindestens einer der Aspekte 11 bis 15,
   gekennzeichnet durch eine an der Hammer-Einrichtung (8, 60) angeordnete Sensoreinrichtung mit Sensormitteln zum Vermessen der Wulsthöhe der Schweißnaht (4, 4') in Verfahrrichtung des Bearbeitungswerkzeuges (24, 82) im Abstand vor dem und/oder hinter dem Bearbeitungswerkzeug.
Aspekt 17. Vorrichtung mit den Merkmalen mindestens einer der Aspekte 11 bis 16,
   gekennzeichnet durch eine vorzugsweise an der Fahreinheit (10, 10') angeordnete elektronische Steuereinrichtung mit zumindest einer Auswerteeinheit zum Ermitteln von zumindest der für den Vorgang des Hämmerns benötigten Schlagdauer an einer Bearbeitungsposition der Schweißnaht (4, 4'), auf Grundlage der von der Sensoreinrichtung jeweils vor und/oder hinter der jeweiligen Bearbeitungsposition gemessenen Wulsthöhe der Schweißnaht (4, 4').
Aspekt 18. Vorrichtung mit den Merkmalen mindestens einer der Aspekte 11 bis 17,
   gekennzeichnet durch eine Führungseinrichtung (14) zum Führen der Fahreinheit (10) und der Hammer-Einrichtung (8) im Wesentlichen entlang der Schweißnaht (4), wobei die Führungseinrichtung (14) mit wenigstens einem der Bauteile (2, 2'), insbesondere im Verbindungsbereich der Bauteile (2, 2'), koppelbar ist.
Aspekt 19. Vorrichtung mit den Merkmalen von Aspekt 18,
   dadurch gekennzeichnet, dass die Führungseinrichtung (14) einen oder mehrere Schienenkörper (16) aufweist, entlang der ein oder mehrere an der Fahreinheit (10) angeordnete Führungsmittel, vorzugsweise Führungsrollen (32, 32'), beweglich geführt sind.
Aspekt 20. Vorrichtung mit den Merkmalen mindestens einer der Aspekte 18 und 19,
   dadurch gekennzeichnet, dass die Fahreinheit (10) mindestens ein Antriebselement aufweist, das mit der Führungseinrichtung (14) für eine Fahrbewegung entlang der Führungseinrichtung (14) gekoppelt ist.
Aspekt 21. Vorrichtung mit den Merkmalen mindestens einer der Aspekte 11 bis 17,
   wobei die Fahreinheit (10') an einem durch das Innere einer Rohrleitung (1) bewegbaren Grundkörper (42) angeordnet ist, der, bezogen auf die Längsachse (43) des Grundkörpers (42), vorzugsweise radial nach außen abstehende, Antriebseinheiten (46, 46', 48, 48') für eine Fahrbewegung der Vorrichtung (40) entlang der Rohrinnenseite aufweist, wobei die Hammer-Einrichtung (60) mittels der Fahreinheit (10') beweglich am Grundkörper (42) angeordnet ist.
Aspekt 22. Vorrichtung mit den Merkmalen mindestens einer der Aspekte 11 bis 17 und Aspekt 21,
   dadurch gekennzeichnet, dass die Fahreinheit (10') einen vorzugsweise an einem der Enden des Grundkörpers (42) drehbar angelenkten Schwenkarm (58) aufweist, an dem die Hammer-Einrichtung (60) angeordnet ist.
Aspekt 23. Vorrichtung mit den Merkmalen von Aspekt 21,
   dadurch gekennzeichnet, dass der Schwingkopf (80) über ein Schwenkgelenk mit dem Schwenkarm (58) gekoppelt ist.
Aspekt 24. Vorrichtung mit den Merkmalen mindestens einer der Aspekte 20 bis 23,
   dadurch gekennzeichnet, dass an dem Grundkörper (42) eine Arretiereinrichtung (50) zum Festsetzen der Vorrichtung (40) innerhalb einer Rohrleitung (1) während des Hämmerns der Schweißnaht (4, 4') angeordnet ist.
Aspekt 25. Vorrichtung mit den Merkmalen von Aspekt 24,
   dadurch gekennzeichnet, dass die Arretiereinrichtung (50) mehrere über den Umfang des Grundkörpers (42) verteilt angeordnete, radial zur Längsachse (43) des Grundkörpers (42) verstellbare Stützelemente (52, 52') aufweist.
Aspekt 26. Vorrichtung zum Herstellen eines sich aus mindestens zwei Bauteilen (2, 2', 68, 68') zusammensetzenden Strukturteiles, mit
   - einer Schweißmaschine zum Erzeugen einer Schweißnaht (4, 4') zwischen mindestens zwei mittels der Schweißnaht (4, 4') miteinander verbindbaren Bauteilen (2, 2', 68, 68'),
   gekennzeichnet durch eine der Schweißmaschine nachgeschaltet angeordnete Vorrichtung (6, 40) zum Schweißnaht-Glätten nach einem der Aspekte 10 bis 24 zum Glätten einer durch die Schweißmaschine erzeugten Schweißnaht (4, 4').
Aspekt 27. Verwendung einer Vorrichtung mit den Merkmalen mindestens einer der Aspekte 10 bis 24, zum Glätten einer Schweißnaht (4, 4') im Verbindungsbereich zweier Bauteile (68, 68') einer Gründungsstruktur einer Offshore-Anlage, vorzugsweise einer Windenergie-Anlage.
Aspekt 28. Verwendung mit den Merkmalen von Aspekt 27,
   wobei eine Schweißnaht (4, 4') im Verbindungsbereich zweier vorzugsweise stumpf miteinander verschweißter Bauteile (2, 2') gehämmert wird, wobei die Bauteile (2, 2') im Verbindungsbereich unterschiedliche Materialdicken aufweisen.

### Bezugszeichenliste

- 1: Rohrstruktur oder -leitung
- 2, 2', 68, 68': Bauteil
- 4, 4': Schweißnaht
- 6, 40: Vorrichtung
- 8, 60: Hammer-Einrichtung
- 10, 10': Fahreinheit
- 12: Gehäuse
- 14: Führungseinrichtung
- 16: Schienenkörper
- 18: Ausleger
- 20, 78: Schwingungserzeuger
- 22, 80: Schwingkopf
- 24, 82: Bearbeitungswerkzeug
- 26, 76: Linearführung
- 28, 28': Aufstellfüße
- 30: Führungsnuten
- 32, 32': Führungsrollen
- 42: Grundkörper
- 43: Längsachse
- 44, 44': Seitenflächen
- 46, 46', 48, 48': Antriebseinheiten
- 50: Arretiereinrichtung
- 52, 52': Stützelemente
- 54, 54': Anpressfüße
- 56: Stirnseite
- 58: Schwenkarm
- 62: Drehlager
- 64: Schwenklager
- 66, 66': Armabschnitt
- 70: Fachwerkstruktur
- 72: Ausrichtlager
- 74: Lagerteil
- 82, 82': Wandfläche
- 84, 84': Wandfläche
- 86: Materialdickensprung

## Patentansprüche

1. Verfahren zum Glätten einer Schweißnaht (4, 4') im Verbindungsbereich von zwei mittels der Schweißnaht (4, 4') miteinander verbundenen Bauteilen (2, 2', 68, 68'), wobei das Verfahren die Schritte umfasst:
- Hämmern der Schweißnaht (4, 4') mittels eines oder mehrerer maschinell angetriebener Bearbeitungswerkzeuge (24, 82), und
- Bewegen des Bearbeitungswerkzeugs (24, 82) im Wesentlichen entlang der Schweißnaht (4, 4').

2. Verfahren nach Anspruch 1,
wobei die Schweißnaht (4, 4') durch das Hämmern über ihre gesamte Breite geglättet wird, wobei das Bearbeitungswerkzeug (24, 82) vorzugsweise während seiner Verfahrbewegung entlang der Schweißnaht (4, 4') in vorbestimmten Abständen etwa quer zur Erstreckungsrichtung der Schweißnaht (4, 4') bewegt wird.

3. Verfahren nach mindestens einem der Ansprüche 1 und 2,
**dadurch gekennzeichnet, dass** das Bearbeitungswerkzeug (24,82) zum Ausführen der Hämmer-Bewegung entlang einer Bewegungsbahn bewegt wird, wobei die Bewegungsbahn zur Oberfläche eines unmittelbar zugeordneten Bearbeitungsabschnitts der Schweißnaht (4, 4') fest oder veränderbar in einem Winkel im Bereich von 45 bis 90 Grad ausgerichtet wird.

4. Verfahren nach mindestens einem der Ansprüche 1 bis 3,
umfassend die Schritte,
- Vermessen einer Wulsthöhe der an den Oberflächen der miteinander verschweißten Bauteile (2, 2', 68, 68') vorstehenden Schweißnaht (4, 4') in Verfahrrichtung vor und/oder hinter einer momentanen Bearbeitungsposition des Bearbeitungswerkzeugs (24, 82),
- Ermitteln von zumindest der für den Vorgang des Hämmerns benötigten Schlagdauer an der momentanen Bearbeitungsposition der Schweißnaht (4, 4'), auf Grundlage der an der jeweiligen momentanen Bearbeitungsposition gemessenen Wulsthöhe der Schweißnaht (4, 4'), und
- Hämmern an der momentanen Bearbeitungsposition auf Basis der ermittelten Schlagdauer.

5. Verfahren zum Herstellen eines sich aus mindestens zwei Bauteilen (2, 2', 68, 68') zusammensetzenden Strukturteiles, umfassend die Schritte:
- Verschweißen der Bauteile (2, 2', 68, 68'), und
- Glätten der Schweißnaht (4, 4') nach einem Verfahren gemäß den Ansprüchen 1 bis 4.

6. Vorrichtung (6, 40) zum Glätten einer Schweißnaht (4, 4') im Verbindungsbereich von zwei mittels der Schweißnaht (4, 4') miteinander verbundenen Bauteilen (2, 2', 68, 68'), mit
- einer Hammer-Einrichtung (24, 82) zum Hämmern der Schweißnaht (4, 4') mit einem oder mehreren angetriebenen Bearbeitungswerkzeugen (24, 82) für die Schweißnaht (4, 4'), und
- einer Fahreinheit (10, 10') zum Bewegen der Hammer-Einrichtung (8, 60) zum Hämmern der Schweißnaht entlang der Schweißnaht (4, 4').

7. Vorrichtung nach Anspruch 6,
**dadurch gekennzeichnet, dass** die Fahreinheit (10, 10') ein oder mehrere Antriebsmittel zum maschinellen Bewegen des Bearbeitungswerkzeuges (24, 82), insbesondere der Fahreinheit (10, 10'), entlang der Schweißnaht (4, 4') aufweist.

8. Vorrichtung nach mindestens einem der Ansprüche 6 und 7,
**dadurch gekennzeichnet, dass** die Hammer-Einrichtung (8, 60) einen Schwingungserzeuger (20,78) mit einem Schwingkopf (22, 80) für das Bearbeitungswerkzeug (24, 82) zum Erzeugen einer periodischen Hämmer-Bewegung aufweist, wobei der Schwingkopf (22, 80) vorzugsweise etwa quer zur Erstreckungsrichtung der Schweißnaht (4, 4') verstellbar an der Fahreinheit (10, 10') aufgenommen ist.

9. Vorrichtung nach mindestens einem der Ansprüche 6 bis 8,
**gekennzeichnet durch** eine an der Hammer-Einrichtung (8, 60) angeordnete Sensoreinrichtung mit Sensormitteln zum Vermessen der Wulsthöhe der Schweißnaht (4, 4') in Verfahrrichtung des Bearbeitungswerkzeuges (24, 82) im Abstand vor dem und/oder hinter dem Bearbeitungswerkzeug und vorzugsweise **durch** eine an der Fahreinheit (10, 10') angeordnete elektronische Steuereinrichtung mit zumindest einer Auswerteeinheit zum Ermitteln von zumindest der für den Vorgang des Hämmerns benötigten Schlagdauer an einer Bearbeitungsposition der Schweißnaht (4, 4'), auf Grundlage der von der Sensoreinrichtung jeweils vor und/oder hinter der jeweiligen Bearbeitungsposition gemessenen Wulsthöhe der Schweißnaht (4, 4')..

10. Vorrichtung nach mindestens einem der Ansprüche 6 bis 9,
**gekennzeichnet durch** eine Führungseinrichtung (14) zum Führen der Fahreinheit (10) und der Hammer-Einrichtung (8) im Wesentlichen entlang der Schweißnaht (4), wobei die Führungseinrichtung (14) mit wenigstens einem der Bauteile (2, 2'), insbesondere im Verbindungsbereich der Bauteile (2, 2'), koppelbar ist.

11. Vorrichtung nach Anspruch 10,
**dadurch gekennzeichnet, dass** die Führungseinrichtung (14) einen oder mehrere Schienenkörper (16) aufweist, entlang der ein oder mehrere an der Fahreinheit (10) angeordnete Führungsmittel, vorzugsweise Führungsrollen (32, 32'), beweglich geführt sind, wobei vorzugsweise die Fahreinheit (10) mindestens ein Antriebselement aufweist, das mit der Führungseinrichtung (14) für eine Fahrbewegung entlang der Führungseinrichtung (14) gekoppelt ist.

12. Vorrichtung nach mindestens einem der Ansprüche 6 bis 9,
wobei die Fahreinheit (10') an einem durch das Innere einer Rohrstruktur oder -leitung (1) bewegbaren Grundkörper (42) angeordnet ist, der, bezogen auf die Längsachse (43) des Grundkörpers (42), vorzugsweise radial nach außen abstehende, Antriebseinheiten (46, 46', 48, 48') für eine Fahrbewegung der Vorrichtung (40) entlang der Rohrinnenseite aufweist, wobei die Hammer-Einrichtung (60) mittels der Fahreinheit (10') beweglich am Grundkörper (42) angeordnet ist.

13. Vorrichtung nach mindestens einem der Ansprüche 6 bis 9 und Anspruch 12, **dadurch gekennzeichnet, dass** die Fahreinheit (10') einen vorzugsweise an einem der Enden des Grundkörpers (42) drehbar angelenkten Schwenkarm (58) aufweist, an dem die Hammer-Einrichtung (60) angeordnet ist, wobei der Schwingkopf (80) vorzugsweise über ein Schwenkgelenk mit dem Schwenkarm (58) gekoppelt ist.

14. Vorrichtung nach mindestens einem der Ansprüche 12 und 13,
**dadurch gekennzeichnet, dass** an dem Grundkörper (42) eine Arretiereinrichtung (50) zum Festsetzen der Vorrichtung (40) innerhalb einer Rohrstruktur oder -leitung (1) während des Hämmerns der Schweißnaht (4, 4') angeordnet ist, wobei die Arretiereinrichtung (50) vorzugsweise mehrere über den Umfang des Grundkörpers (42) verteilt angeordnete, radial zur Längsachse (43) des Grundkörpers (42) verstellbare Stützelemente (52, 52') aufweist.

15. Vorrichtung zum Herstellen eines sich aus mindestens zwei Bauteilen (2, 2', 68, 68') zusammensetzenden Strukturteiles, mit
- einer Schweißmaschine zum Erzeugen einer Schweißnaht (4, 4') zwischen mindestens zwei mittels der Schweißnaht (4, 4') miteinander verbindbaren Bauteilen (2, 2', 68, 68'),
**gekennzeichnet durch** eine der Schweißmaschine nachgeschaltet angeordnete Vorrichtung (6, 40) zum Schweißnaht-Glätten nach einem der Ansprüche 6 bis 14 zum Glätten einer **durch** die Schweißmaschine erzeugten Schweißnaht (4, 4').

16. Verwendung einer Vorrichtung nach einem der Ansprüche 6 bis 14, zum Glätten einer Schweißnaht (4, 4') im Verbindungsbereich zweier Bauteile (68, 68') einer Gründungsstruktur einer Offshore-Anlage, vorzugsweise einer Windenergie-Anlage.
